# EUROPÄISCHE PATENTSCHRIFT

(11) **EP 4 424 465 B1**
(45) Veröffentlichungstag und Bekanntmachung des Hinweises auf die Patenterteilung: **18.06.2025**
(21) Anmeldenummer: 23159178.5
(22) Anmeldetag: 28.02.2023
(51) Int. Cl.: B23Q 1/66, B23Q 1/52, B23Q 1/54, B23Q 11/00, B23Q 11/08, B23Q 17/24

(54) **WERKZEUGMASCHINE MIT EINER VERSCHIEBBAREN FUNKTIONSEINRICHTUNG ZUM SCANNEN ODER VOR- ODER NACHBEARBEITEN VON WERKSTÜCKEN SOWIE ZUGEHÖRIGES VERFAHREN**
MACHINE TOOL WITH A DISPLACEABLE FUNCTIONAL DEVICE FOR SCANNING OR PRE- OR POST-MACHINING WORKPIECES AND ASSOCIATED METHOD
MACHINE-OUTIL DOTÉE D'UN DISPOSITIF FONCTIONNEL MOBILE DESTINÉ AU BALAYAGE OU AU TRAITEMENT PRÉALABLE DE PIÈCES À USINER AINSI QUE PROCÉDÉ ASSOCIÉ

(43) Veröffentlichungstag der Anmeldung: 04.09.2024
(73) Patentinhaber: Schwäbische Werkzeugmaschinen GmbH, 78713 Schramberg-Waldmössingen (DE)
(72) Erfinder: ARMLEDER, Wolfgang, 78628 Rottweil (DE); BRENDEL, Vitalij, 78628 Rottweil (DE); SCHWARZ, Bastian, 78727 Oberndorf a.N. (DE)
(74) Vertreter: Kohler Schmid Möbus Patentanwälte

(56) Entgegenhaltungen:
- EP-A1- 3 299 119
- DE-A1- 102018 104 199

## Beschreibung

Die Erfindung betrifft eine Werkzeugmaschine zur insbesondere spanenden Bearbeitung von Werkstücken gemäß dem Oberbegriff von Anspruch 1.

Eine derartige Werkzeugmaschine ist beispielsweise durch die EP 3 299 119 A1 bekannt geworden. Diese bekannte Werkzeugmaschine umfasst einen vorderen Beladeraum und einen hinteren Arbeitsraum mit zwei Arbeitsspindeln zur spanenden Bearbeitung von Werkstücken, einen zwischen Belade- und Arbeitsraum angeordneten Schwenkträger, der um eine horizontale Hauptdrehachse drehbar gelagert ist und auf zwei bezüglich der Hauptdrehachse einander gegenüberliegenden Trägerseiten jeweils einen Werkstückträger zum Aufspannen von Werkstücken aufweist. Der Schwenkträger ist in einer ersten Drehendstellung und in einer gegenüber der ersten Drehendstellung um 180° verdrehten, zweiten Drehendstellung hochstehend ausgerichtet. In der ersten Drehendstellung des Schwenkträgers sind einer der beiden Werkstückträger für eine Beladung mit Werkstücken im Beladeraum und der andere Werkstückträger für eine Bearbeitung von Werkstücken im Arbeitsraum angeordnet; in der zweiten Drehendstellung des Schwenkträgers sind die beiden Werkstückträger gegeneinander vertauscht. Der Schwenkträger ragt in den beiden Drehend-stellungen weniger weit in die Belade- und Arbeitsräume hinein als während des Verschwenkens zwischen den beiden Drehendstellungen, wodurch beim Schwenkvorgang eine sehr große Bogen-Sehnen-Differenz entsteht. Die Werkzeugmaschine weist außerdem im Beladeraum eine mit aufgespannten Werkstücken zusammenwirkende Nachbearbeitungseinrichtung mit einem rotierbaren Nachbearbeitungswerkzeug zum hauptzeitparallelen Nachbearbeiten eines beladeraumseitigen Werkstücks auf. Die Nachbearbeitungseinrichtung kann motorisch aus einer unteren Parkposition bis in eine obere Arbeitsposition verfahren werden, in der das Nachbearbeitungswerkzeug mit den Werkstücken zusammenwirkt. Die Parkposition befindet sich dabei vor und unterhalb des beladeraumseitigen Werkstückträgers und außerhalb des Schwenkbereichs (Hüllzylinder) des Schwenkträgers. Allerdings ist durch die Nachbearbeitungseinrichtung, auch wenn sie in die Parkposition verfahren ist, die Zugänglichkeit des Beladeraums einschränkt.

Die Bearbeitung mittels der Arbeitspindel(n) muss den teilweise durch Schweißverzug und Spannverzug gekrümmten Profilquerschnitten der Werkstücke folgen. Die zur Bearbeitung aufgespannten Bauteile werden dazu heute sinnvollerweise durch einen Laserscanner in ihrem IST-Zustand erfasst. Anschließend werden die Messdaten dem Bearbeitungsprogramm überlagert. Am Markt üblich sind arbeitsraumseitige Scanner, welche im Bereich der Hauptspindel angebracht werden. Durch die Nutzung der kartesischen XY(Z) Bewegung der Hauptspindel können so die Profile der arbeitsraumseitigen Werkstücke vermessen werden. Der sinnvolle Abstand zwischen Werkstück und Scanner liegt bei ca. 50-200 mm. Die Zeit für den Scan-Vorgang addiert sich dabei zur Hauptzeit der eigentlichen Werkstückbearbeitung. Je nach Verschmutzungsgrad der Werkstücke (z.B. aufgrund einer Vorbearbeitung) sind diese durch spindelnahe Reinigungs- oder Blasdüsen zunächst zu säubern.

Demgegenüber ist es die Aufgabe der vorliegenden Erfindung, bei einer Werkzeugmaschine der eingangs genannten Art den Zeitbedarf für das Vermessen oder Vor-/Nachbearbeiten (Reinigen) der Werkstücke unter Nutzung eines (Doppel-)Schwenkträgerprinzips hauptzeitparallel zu gestalten.

Diese Aufgabe wird bei einer Werkzeugmaschine der eingangs genannten Art erfindungsgemäß dadurch gelöst, dass die mindestens eine Funktionseinrichtung mittels mindestens einer Führung, welche im Belade- oder Arbeitsraum außerhalb des Hüllzylinders angeordet ist, in axialer Richtung der Hauptdrehachse zwischen der mindestens einen Parkstellung und der mindestens einen Arbeitsstellung verschiebbar geführt ist.

Erfindungsgemäß wird, wenn sich der Schwenkträger in einer seiner beiden Drehendstellungen befindet, die Funktionseinrichtung aus der außerhalb des Hüllzylinders befindlichen Parkstellung, vorzugsweise seitlich neben dem Hüllzylinder, motorisch in axialer Richtung der Hauptdrehachse in die mindestens eine Arbeitsstellung verschoben. In der Arbeitsstellung befindet sich die Funktionseinrichtung ausreichend nah vor den aufgespannten Werkstücken, um mit diesen zusammenwirken zu können.

Die mindestens eine Funktionseinrichtung kann in ihrer Arbeitsstellung im Beladeraum oder im Arbeitsraum angeordnet sein. Auch können mindestens zwei Funktionseinrichtungen vorhanden sein, von denen eine in ihrer Arbeitsstellung im Beladeraum und die andere in ihrer Arbeitsstellung im Arbeitsraumraum angeordnet sein können.

Die Funktionseinrichtung kann entweder nur eine einzige Parkstellung auf einer der beiden axialen Seiten des Hüllzylinders oder aber zwei Parkstellungen zu beiden axialen Seiten des Hüllzylinders aufweisen. Im ersteren Fall bewegt sich die Funktionseinrichtung nach dem Scannen oder nach dem Vor-/Nachbearbeiten zurück in die Parkstellung; im letzteren Fall kann sich die Funktionseinrichtung alternativ auch weiter in die andere Parkstellung bewegen.

Besonders bevorzugt handelt es sich bei der mindestens einen Funktionseinrichtung um einen Scanner zum Scannen der aufgespannten Werkstücke oder um eine Voroder Nachbearbeitungseinrichtung zum Vor- oder Nachbearbeiten der aufgespannten Werkstücke, insbesondere um eine Reinigungseinrichtung zum Reinigen der aufgespannten Werkstücke.

Die mindestens eine Arbeitsstellung der Funktionseinrichtung umfasst vorzugsweise jede axiale Stellung entlang des Schwenkträgers, so dass die Funktionseinrichtung den Werkstückträger entlang dessen gesamter Länge vollständig abfahren kann, um mit einem darauf aufgespannten Werkstück entlang dessen gesamter Länge zusammenwirken zu können. Die mindestens eine Führung erstreckt sich vorzugsweise parallel zur Hauptdrehachse und entlang des gesamten Schwenkträgers und kann direkt unterhalb oder oberhalb des Hüllzylinders angeordnet sein.

Besonders bevorzugt sind eine obere und eine untere Führung vorhanden, in denen die mindestens eine Funktionseinrichtung zwischen der mindestens einen Parkstellung und der mindestens einen Arbeitsstellung oben und unten verschiebbar geführt ist.

In einer Ausführungsform der Erfindung sind die Werkstückträger am Schwenkträger jeweils um eine zur Hauptdrehachse parallele A-Achse drehbar gelagert. Dabei kann der Schwenkträger in einer Weiterbildung dieser Ausführungsform auf jeder seiner beiden Trägerseiten mindestens zwei jeweils um eine zur Hauptdrehachse parallele A-Achse drehbar gelagerte Werkstückträger aufweisen. Bevorzugt weist der Schwenkträger zwei um die Hauptdrehachse drehbar gelagerte Seitenwangen, zwischen denen die Werkstückträger angeordnet sind und an denen die Werkstückträger um die A-Achse drehbar gelagert sind, sowie zwei radial äußere Verbindungsträger auf, welche die beiden Seitenwangen miteinander zu einem Drehverbund verbinden. Statt zweier äußerer Verbindungsträger ist erfindungsgemäß auch ein einziger Verbindungsträger möglich.

In einer anderen Ausführungsform der Erfindung ist der Schwenkträger durch eine Schwenkträgerplatte gebildet, an deren zwei einander bezüglich der Hauptdrehachse gegenüberliegenden Trägerseiten jeweils ein - nicht seinerseits um eine A-Achse drehbar gelagerter - Werkstückträger angeordnet ist. Bevorzugt weisen die beiden Werkstückträger jeweils eine Auflagekante für Werkstücke auf.

Die Erfindung betrifft auch ein Verfahren zum hautzeitparallelen Scannen und/oder Vor- oder Nachbearbeiten, insbesondere Reinigen, von Werkstücken an einer wie oben beschriebenen Werkzeugmaschine mit folgenden Verfahrensschritten:
- Verschwenken des Schwenkträgers in die eine Drehendstellung,
- Beladen des beladeraumseitigen Werkstückträgers mit Werkstücken und/oder Bearbeiten der auf dem arbeitsraumseitigen Werkstückträger aufgespannten Werkstücke mittels der mindestens einen Arbeitsspindel,
- Bewegen der mindestens einen Funktionseinrichtung aus der mindestens einen Parkstellung in die mindestens eine Arbeitsstellung,
- Scannen und/oder Vor- oder Nachbearbeiten, insbesondere Reinigen, von beladeund/oder arbeitsraumseitig aufgespannten Werkstücken mittels der mindestens einen Funktionseinrichtung,
- Bewegen der mindestens einen Funktionseinrichtung aus der mindestens einen Arbeitsstellung zurück in die mindestens eine Parkstellung oder weiter in eine andere Parkstellung, und
- Verschwenken des Schwenkträgers in die andere Drehendstellung und Wiederholen der obigen Verfahrensschritte.

Im Falle einer zwei unterschiedliche Funktionseinrichtungen (z.B. Scanner und Nachbearbeitungseinrichtung) aufweisenden Multifunktionseinheit kann vorteilhaft bei der Hinfahrt der Multifunktionseinheit nur eine der beiden Funktionseinrichtungen (Scanner) und bei der Rückfahrt der Multifunktionseinheit nur die andere Funktionseinrichtung (Nachbearbeitungseinrichtung) aktiviert werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: schematisch eine erfindungsgemäße Werkzeugmaschine mit zwei an einem Schwenkträger schwenkbar gelagerten Werkstückträgern in einer Seitenansicht (Fig. 1a) und in einer Frontansicht (Fig. 1b); und
- Fig. 2: schematisch eine zweite Ausführungsform einer erfindungsgemäßen Werkzeugmaschine mit zwei an einem Schwenkträger unverschwenkbar angeordneten Werkstückträgern in einer Seitenansicht.

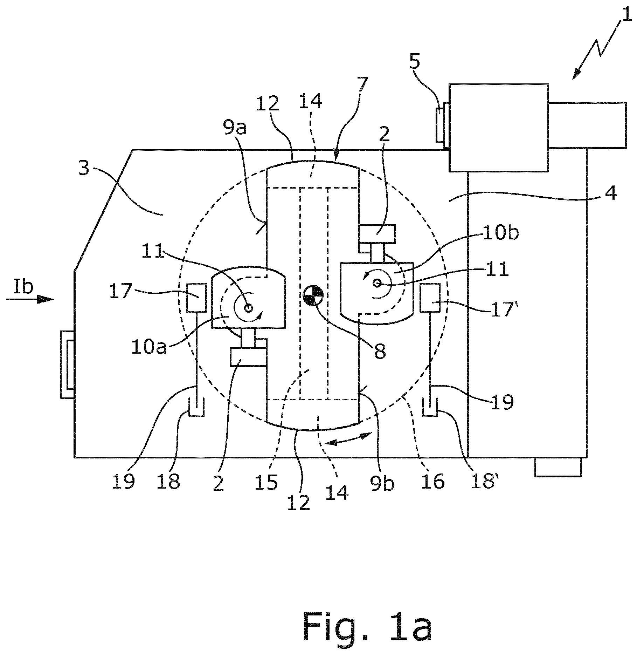

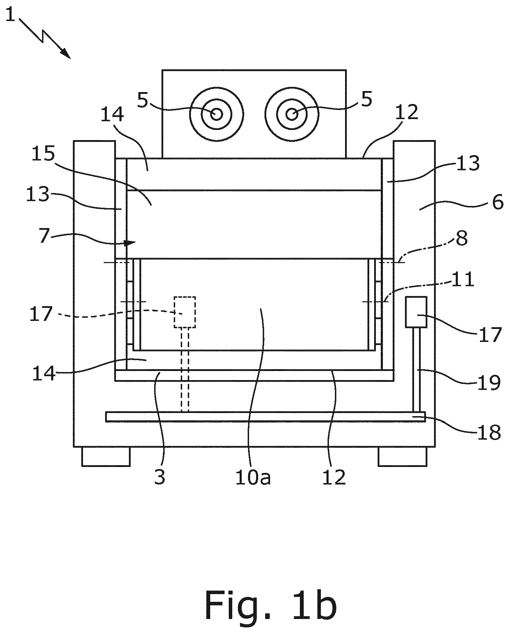

Die in **Fign. 1a****,** **1b** gezeigte Werkzeugmaschine **1** dient zur spanenden Bearbeitung von Werkstücken **2** und weist einen vorderen Beladeraum **3** und einen hinteren Arbeitsraum **4** mit mindestens einer, hier mit zwei horizontalen Arbeitsspindeln **5** zur spanenden Bearbeitung von Werkstücken 2 auf. Zwischen dem Beladeraum 3 und dem Arbeitsraum 4 ist in einem Maschinengestell **6** ein Schwenkträger **7** angeordnet, der um eine horizontale Hauptdrehachse **8** drehbar gelagert ist. Auf seinen beiden bezüglich der Hauptdrehachse 8 einander gegenüberliegenden Trägerseiten **9a, 9b** weist der Schwenkträger 7 jeweils einen Werkstückträger **10a, 10b** zum Aufspannen von Werkstücken 2 auf. Die beiden Werkstückträger 10a, 10b sind am Schwenkträger 7 jeweils um eine zur Hauptdrehachse 8 parallele A-Achse **11** drehbar gelagert und zwischen den beiden radial äußeren Längsenden **12** des Schwenkträgers 7 angeordnet.

Wie gezeigt, kann der Schwenkträger 7 zwei um die Hauptdrehachse 8 drehbar gelagerte Seitenwangen **13** aufweisen, zwischen denen die Werkstückträger 10a, 10b angeordnet sind und an denen die Werkstückträger 10a, 10b um die A-Achse 11 drehbar gelagert sind. Die beiden Seitenwangen 13 sind miteinander durch zwei äußere Verbindungsträger **14** des Schwenkträgers 7, welche die äußeren Längsenden 12 des Schwenkträgers 7 ausbilden, zu einem Drehverbund verbunden. Zwischen den beiden äußeren Verbindungsträgern 14 ist noch eine Trennwand **15** angeordnet.

Alternativ können die Seitenwangen 13, die Verbindungsträger 14 und die Trennwand 15 auch durch einen einzigen Verbindungsträger ausgebildet sein.

Durch pendelndes Verschwenken des Schwenkträgers 7 um die Drehachse 8 um 180° lassen sich der beladeraumseitige Werkstückträger 10a und der arbeitsraumseitige Werkstückträger 10b gegeneinander vertauschen. Der Arbeitsraum 4 ist entweder ein in sich geschlossener Maschinenraum oder bildet gemeinsam mit dem Beladeraum 3 einen in sich geschlossenen Maschinenraum.

Der Schwenkträger 7 ist in der in Fig. 1a gezeigten, ersten Drehendstellung und in einer gegenüber der ersten Drehendstellung um 180° verdrehten, zweiten Drehendstellung hochstehend ausgerichtet, um die Belade- und Arbeitsräume 3, 4 durch die Trennwand 15 voneinander zu trennen. In der ersten Drehendstellung des Schwenkträgers 7 ist der eine Werkstückträger 10a für eine Beladung mit Werkstücken 2 in dem Beladeraum 3 und der andere Werkstückträger 10b für eine Bearbeitung von Werkstücken 2 in dem Arbeitsraum 4 angeordnet. In der zweiten Drehendstellung des Schwenkträgers 7 sind die beiden Werkstückträger 10a, 10b gegeneinander vertauscht. Beim Verschwenken des Schwenkträgers 7 zwischen den beiden Drehendstellungen wird durch die beiden äußeren Längsenden 12 des Schwenkträgers 7 eine zylindrische Störkontur oder Hüllzylinder **16** definiert, wobei der Schwenkträger 7 in den beiden Drehendstellungen weniger weit in in die Belade- und Arbeitsräume 3, 4 hineinragt als während des Verschwenkens zwischen den beiden Drehendstellungen.

Am Maschinengestell 6 ist im Beladeraum 3 eine mit den aufgespannten Werkstücken 2 zusammenwirkende Funktionseinrichtung **17** über einen motorischen Antrieb (nicht gezeigt) zwischen einer in Fig. 1b rechten Parkstellung, welche sich außerhalb des Hüllzylinders 16 befindet, und mindestens einer in Fig. 1b gestrichelt dargestellten, linken Arbeitsstellung, welche sich innerhalb des Hüllzylinders 16 und vor dem beladeraumseitigen Werkstückträger 10a des in einer der beiden Drehendstellungen befindlichen Schwenkträgers 7 befindet, in axialer Richtung der Hauptdrehachse 8 verschiebbar. Dazu weist die Werkzeugmaschine 1 eine außerhalb des Hüllzylinders 16 im Beladeraum 3 angeordnete, stationäre Führung **18,** hier Linearführung, auf, die bevorzugt parallel zur Hauptdrehachse 8 verläuft und sich entlang der gesamten axialen Länge des Schwenkträgers 7 erstreckt, so dass die Arbeitsstellung der Funktionseinrichtung 17 jede Stellung zwischen den beiden axialen Enden des Schwenkträgers 7, also hier zwischen den beiden Seitenwangen 13, umfasst.

Die Linearführung 18 kann, wie gezeigt, unterhalb des Hüllzylinders 16 oder aber alternativ auch oberhalb des Hüllzylinders 16 angeordnet sein. Auch können im Beladeraum 3 unterhalb und oberhalb des Hüllzylinders 16 eine untere und eine obere stationäre (Linear)Führung angeordnet sein, in denen die Funktionseinrichtung 17 zwischen der Park- und der Arbeitsstellung unten und oben verschiebbar geführt ist.

Alternativ oder zusätzlich kann auch im Arbeitsraum 4 eine Funktionseinrichtung **17'** über einen motorischen Antrieb (nicht gezeigt) zwischen einer Parkstellung, welche sich außerhalb des Hüllzylinders 16 befindet, und mindestens einer Arbeitsstellung, welche sich innerhalb des Hüllzylinders 16 und vor dem arbeitsraumseitigen Werkstückträger 10a des in einer der beiden Drehendstellungen befindlichen Schwenkträgers 7 befindet, verschiebbar geführt sein. Dazu weist die Werkzeugmaschine 1 eine außerhalb des Hüllzylinders16 im Arbeitsraum 4 angeordnete, stationäre (Linear)Führung **18'** auf, die bevorzugt parallel zur Hauptdrehachse 8 verläuft und sich entlang der gesamten Länge des Schwenkträgers 7 erstreckt, so dass die Arbeitsstellung der Funktionseinrichtung 17' jede Stellung zwischen den beiden axialen Enden des Schwenkträgers 7 umfasst. Die Linearführung 18' kann, wie gezeigt, unterhalb des Hüllzylinders 16 oder aber alternativ auch oberhalb des Hüllzylinders 16 angeordnet sein. Auch können im Arbeitsraum 4 unterhalb und oberhalb des Hüllzylinders 16 eine untere und eine obere stationäre Linearführung angeordnet sein, in denen die Funktionseinrichtung 17' zwischen der Park- und der Arbeitsstellung unten und oben verschiebbar geführt ist.

Statt der in Fig. 1b gezeigten rechten Parkstellung rechts neben dem Hüllzylinder 16 kann die Funktionseinrichtung 17, 17' alternativ oder zusätzlich auch eine linke Parkstellung links neben dem Hüllzylinder 16 aufweisen. Im letzteren Fall kann die Funktionseinrichtung 17, 17' dann wahlweise zurück in die eine (Ausgangs)Parkstellung oder weiter in die andere Parkstellung bewegt werden.

Die Funktionseinrichtung 17, 17' kann beispielsweise an einem vertikalen Teleskopträger **19** angeordnet sein, der mittels eines motorischen Antriebs (nicht gezeigt) längenverstellbar ist, um die Funktionseinrichtungen 17, 17' in der Höhe zu verstellen.

Bei der Funktionseinrichtung kann es sich beispielsweise um einen beladeraumseitigen (Laser)Scanner 17 zum Scannen der aufgespannten Werkstücke 2 in ihrem IST-Zustand oder einen bearbeitungsseitigen (Laser)Scanner zum Erfassen der bearbeiteten Bauteile 2 handeln. Alternativ oder zusatzlich kann die Funktionseinrichtung auch eine beladeraum- und/oder arbeitsraumseitige Vor- oder Nachbearbeitungseinrichtung zum Vor- oder Nachbearbeiten von aufgespannten Werkstücken 2 (z.B. eine Reinigungseinrichtung zum Reinigen von aufgespannten Werkstücken 2) sein.

Die Funktionsweise der Werkzeugmaschine 1 ist wie folgt:
In der in Fig. 1a gezeigten, ersten Drehendstellung des Schwenkträgers 7 wird der beladeraumseitige Werkstückträger 10a mit Werkstücken 2 beladen, und die auf dem arbeitsraumseitigen Werkstückträger 10b aufgespannten Werkstücke 2 werden mittels der Arbeitsspindeln 5 bearbeitet. Der beladeraumseitige Scanner 17 wird aus der Parkstellung in die mindestens Arbeitsstellung und entlang der aufgespannten Werkstücke 2 in einem Abstand von ca. 50-200 mm bewegt, um die Werkstücke 2 in ihrem IST-Zustand zu scannen und ihre IST-Positionen zu erfassen. Die so erfassten Messdaten können dem Bearbeitungsprogramm für die Werkstücke 2 überlagert werden. Anschließend wird der beladeraumseitige Scanner 17 wieder zurück in die Parkstellung bewegt. Die arbeitsraumseitige Reinigungseinrichtung 17' wird aus der Parkstellung in die mindestens eine Arbeitsstellung bzw. entlang der aufgespannten Werkstücke 2 bewegt, um die bearbeiteten Werkstücke 2 zu reinigen, also z.B. abzublasen oder mit Spülflüssigkeit zu waschen. Danach wird die arbeitsraumseitige Reinigungseinrichtung 17' wieder zurück in die Parkstellung oder, falls vorhanden, alternativ weiter in die andere Parkstellung bewegt.

Anschließend wird der Schwenkträger 7 um 180° um die Hauptdrehachse 8 in die zweite Drehendstellung geschwenkt, wobei auch die Werkstückträger 10a, 10b um 180° um die A-Achse 11 geschwenkt werden. Der Werkstückträger 10b befindet sich nun im Beladeraum 3, so dass die bearbeiteten Werkstücke 2 vom Werkstückträger 10b entladen und dann neue Werkstücke 2 auf dem Werkstückträger 10b aufgespannt werden können. Der Werkstückträger 10a befindet sich nun im Arbeitsraum 4, so dass die darauf aufgespannten Werkstücke 2 mittels der Arbeitsspindeln 5 bearbeitet werden. Wie oben beschrieben wird der beladeraumseitige Scanner 17 aus der Parkstellung entlang der aufgespannten Werkstücke 2 bewegt, um die Werkstücke 2 in ihrem IST-Zustand zu scannen, und anschließend wieder zurück in die Parkstellung oder, falls vorhanden, alternativ weiter in die andere Parkstellung bewegt. Die so erfassten Messdaten können dem Bearbeitungsprogramm für die Werkstücke 2 überlagert werden. Die arbeitsraumseitige Reinigungseinrichtung 17' wird aus der Parkstellung entlang der aufgespannten Werkstücke 2 bewegt, um die bearbeiteten Werkstücke 2 zu reinigen, und danach wieder zurück in die Parkstellung oder, falls vorhanden, alternativ weiter in die andere Parkstellung bewegt.

Anschließend wird der Schwenkträger 7 in entgegengesetzter Richtung um 180° um die Hauptdrehachse 8 zurück in die erste Drehendstellung geschwenkt, wobei auch die Werkstückträger 10a, 10b um 180° um die A-Achse 11 geschwenkt werden. Die obigen Verfahrensschritte werden wiederholt, bis alle vorhandenen Werkstücke 2 bearbeitet und entladen worden sind.

Im Falle einer zwei unterschiedliche Funktionseinrichtungen 17 (z.B. Scanner und Reinigungseinrichtung) aufweisenden Multifunktionseinheit kann bei der Hinfahrt der Multifunktionseinheit aus der Parkstellung in die äußerste linke Arbeitsstellung, also in Fig. 1b von rechts nach links, nur der Scanner und bei der Rückfahrt der Multifunktionseinheit aus der äußersten linken Arbeitsstellung in die Parkstellung, also in Fig. 1b von links nach rechts, nur die Reinigungseinrichtung aktiviert werden. Auch ist es möglich, die Werkstücke 2 bei der Hinfahrt mit Spülflüssigkeit zu waschen und bei der Rückfahrt mit Druckluft zu trocknen.

Anders als in den Fign. 1a, 1b gezeigt, kann der Schwenkträger 7 auf seinen beiden Trägerseiten 9a, 9b jeweils auch zwei oder mehr jeweils um eine A-Achse drehbar gelagerte Werkstückträger 10a, 10b zum Aufspannen von Werkstücken 2 aufweisen.

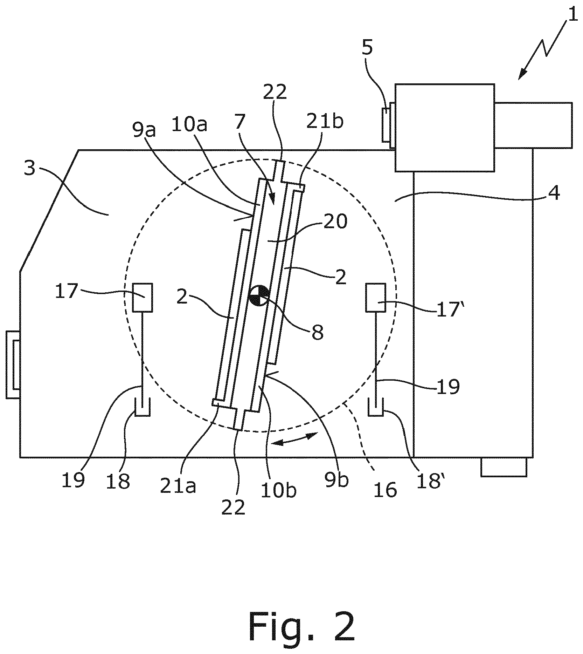

Von der Werkzeugmaschine der Fign. 1a, 1b unterscheidet sich die in **Fig. 2** gezeigte Werkzeugmaschine 1 dadurch, dass hier der Schwenkträger 7 durch eine Schwenkträgerplatte **20** gebildet ist, die an ihren einander gegenüberliegenden Trägerseiten 9a, 9b jeweils einen - nicht seinerseits um eine A-Achse drehbar gelagerten -Werkstückträger 10a, 10b mit einer Auflagekante **21a, 21b** für Werkstücke 2 aufweist. In den beiden um 180° gegeneinander verdrehten Drehendstellungen ist die Schwenkträgerplatte 20 hochstehend ausgerichtet, um die Belade- und Arbeitsräume 3, 4 voneinander zu trennen. Beim Verschwenken der Schwenkträgerplatte 20 zwischen den beiden Drehendstellungen wird auch hier durch die beiden äußeren Längsenden **22** der Schwenkträgerplatte 20 eine zylindrische Störkontur bzw. ein Hüllzylinder 16 definiert, wobei die Schwenkträgerplatte 20 in den beiden Drehendstellungen weniger weit in in die Belade- und Arbeitsräume 3, 4 hineinragt als während des Verschwenkens zwischen den beiden Drehendstellungen.

Die Funktionsweise der in Fig. 2 gezeigten Werkzeugmaschine 1 entspricht der oben beschriebenen Funktionsweise mit dem Unterschied, dass die Werkstückträger 10a, 10b nicht um eine A-Achse gedreht werden. In den beiden Drehendstellungen des Schwenkträgers 7 wird ein Werkstück 2, z.B. eine Blechtafel, auf die Auflagekante 21a, 21b des jeweils beladeraumseitigen Werkstückträgers 10a, 10b gestellt und festgespannt.

## Patentansprüche

1. Werkzeugmaschine (1) zur insbesondere spanenden Bearbeitung von Werkstücken (2), aufweisend
- einen vorderen Beladeraum (3) und einen hinteren Arbeitsraum (4) mit mindestens einer Arbeitsspindel (5) zur insbesondere spanenden Bearbeitung von Werkstücken (2),
- einen zwischen dem Beladeraum (3) und dem Arbeitsraum (4) angeordneten Schwenkträger (7), der um eine horizontale Hauptdrehachse (8) drehbar gelagert ist und auf zwei bezüglich der Hauptdrehachse (8) einander gegenüberliegenden Trägerseiten (9a, 9b) jeweils mindestens einen Werkstückträger (10a, 10b) zum Aufspannen von Werkstücken (2) aufweist, wobei der Schwenkträger (7) in einer ersten Drehendstellung und in einer gegenüber der ersten Drehendstellung um 180° verdrehten, zweiten Drehendstellung hochstehend ausgerichtet ist, wobei in der ersten Drehendstellung des Schwenkträgers (7) einer der beiden Werkstückträger (10a, 10b) für eine Beladung mit Werkstücken (2) in dem Beladeraum (3) und der andere Werkstückträger für eine Bearbeitung von Werkstücken (2) in dem Arbeitsraum (4) angeordnet sind und in der zweiten Drehendstellung des Schwenkträgers (7) die beiden Werkstückträger (10a, 10b) gegeneinander vertauscht sind, wobei der Schwenkträger (7) in den beiden Drehendstellungen weniger weit in die Belade- und Arbeitsräume (3, 4) hineinragt als während des Verschwenkens zwischen den beiden Drehendstellungen, und
- mindestens eine mit den aufgespannten Werkstücken (2) zusammenwirkende Funktionseinrichtung (17, 17'), die motorisch zwischen mindestens einer Parkstellung, welche sich außerhalb eines durch Drehen des Schwenkträgers (7) definierten Hüllzylinders (16) befindet, und mindestens einer Arbeitsstellung, welche sich innerhalb des Hüllzylinders (16) und in den beiden Drehendstellungen des Schwenkträgers (7) jeweils vor einem der beiden Werkstückträger (10a, 10b) befindet, beweglich gelagert ist,
**dadurch gekennzeichnet,**
**dass** die mindestens eine Funktionseinrichtung (17, 17') mittels mindestens einer Führung (18, 18'), welche im Belade- oder Arbeitsraum (3, 4) außerhalb des Hüllzylinders (16) angeordet ist, in axialer Richtung der Hauptdrehachse (8) zwischen der mindestens einen Parkstellung und der mindestens einen Arbeitsstellung verschiebbar geführt ist.

2. Werkzeugmaschine nach Anspruch 1, **dadurch gekennzeichnet, dass** die mindestens eine Funktionseinrichtung (17, 17') in ihrer Arbeitsstellung im Beladeraum (3) oder im Arbeitsraumraum (4) angeordnet ist.

3. Werkzeugmaschine nach Anspruch 1 oder 2, **gekennzeichnet durch** mindestens zwei Funktionseinrichtungen (17, 17'), von denen eine in ihrer Arbeitsstellung im Beladeraum (3) und die andere in ihrer Arbeitsstellung im Arbeitsraum (4) angeordnet sind.

4. Werkzeugmaschine nach einem der vorhergehenden Ansprüche, **dadurch gekennzeichnet, dass** die Funktionseinrichtung (17, 17') zu beiden axialen Seiten des Hüllzylinders (16) jeweils eine Parkstellung aufweist.

5. Werkzeugmaschine nach einem der vorhergehenden Ansprüche, **dadurch gekennzeichnet, dass** die mindestens eine Funktionseinrichtung (17, 17') ein Scanner zum Scannen der aufgespannten Werkstücke (2) oder eine Vor- oder Nachbearbeitungseinrichtung zum Vor- oder Nachbearbeiten der aufgespannten Werkstücke (2), insbesondere eine Reinigungseinrichtung zum Reinigen der aufgespannten Werkstücke (2), ist.

6. Werkzeugmaschine nach einem der vorhergehenden Ansprüche, **dadurch gekennzeichnet, dass** die mindestens eine Arbeitsstellung der Funktionseinrichtung (17, 17') jede axiale Stellung entlang des Schwenkträgers (7) umfasst.

7. Werkzeugmaschine nach einem der vorhergehenden Ansprüche, **dadurch gekennzeichnet, dass** die mindestens eine Führung (18, 18') sich parallel zur Hauptdrehachse (8) und entlang des gesamten Schwenkträgers (7) erstreckt.

8. Werkzeugmaschine nach einem der vorhergehenden Ansprüche, **dadurch gekennzeichnet, dass** die mindestens eine Führung (18, 18') unterhalb oder oberhalb des Hüllzylinders (13) angeordnet ist.

9. Werkzeugmaschine nach einem der vorhergehenden Ansprüche, **gekennzeichnet durch** eine obere und eine untere Führung, in denen die mindestens eine Funktionseinrichtung (17, 17') zwischen der mindestens einen Parkstellung und der mindestens einen Arbeitsstellung oben und unten verschiebbar geführt ist.

10. Werkzeugmaschine nach einem der vorhergehenden Ansprüche, **dadurch gekennzeichnet, dass** die Werkstückträger (10a, 10b) am Schwenkträger (7) jeweils um eine zur Hauptdrehachse (8) parallele A-Achse (11) drehbar gelagert sind.

11. Werkzeugmaschine nach Anspruch 10, **dadurch gekennzeichnet, dass** der Schwenkträger (7) auf jeder seiner beiden Trägerseiten (9a, 9b) mindestens zwei jeweils um eine zur Hauptdrehachse (8) parallele A-Achse (11) drehbar gelagerte Werkstückträger (10a, 10b) aufweist.

12. Werkzeugmaschine nach Anspruch 10 oder 11, **dadurch gekennzeichnet, dass** der Schwenkträger (7) zwei um die Hauptdrehachse (8) drehbar gelagerte Seitenwangen (13), zwischen denen die Werkstückträger (10a, 10b) angeordnet sind und an denen die Werkstückträger (10a, 10b) um die A-Achse (11) drehbar gelagert sind, sowie zwei radial äußere Verbindungsträger (14) aufweist, welche die beiden Seitenwangen (13) miteinander zu einem Drehverbund verbinden.

13. Werkzeugmaschine nach einem der Ansprüche 1 bis 9, **dadurch gekennzeichnet, dass** der Schwenkträger (7) durch eine Schwenkträgerplatte (20) gebildet ist, an deren zwei einander bezüglich der Hauptdrehachse (8) gegenüberliegenden Trägerseiten (9a, 9b) jeweils ein Werkstückträger (10a, 10b), insbesondere mit einer Auflagekante (21a, 21b) für Werkstücke (2), angeordnet ist.

14. Verfahren zum hautzeitparallelen Scannen und/oder Vor- oder Nachbearbeiten, insbesondere Reinigen, von Werkstücken (2) an einer Werkzeugmaschine (1) nach einem der vorhergehenden Ansprüche, mit folgenden Verfahrensschritten:
- Verschwenken des Schwenkträgers (7) in die eine Drehendstellung,
- Beladen des beladeraumseitigen Werkstückträgers (10a) mit Werkstücken (2) und/oder Bearbeiten der auf dem arbeitsraumseitigen Werkstückträger (10b) aufgespannten Werkstücke (2) mittels der mindestens einen Arbeitsspindel (5),
- Bewegen der mindestens einen Funktionseinrichtung (17, 17') aus der mindestens einen Parkstellung in die mindestens eine Arbeitsstellung,
- Scannen und/oder Vor- oder Nachbearbeiten, insbesondere Reinigen, von belade- und/oder arbeitsraumseitig aufgespannten Werkstücken (2) mittels der mindestens einen Funktionseinrichtung (17, 17'),
- Bewegen der mindestens einen Funktionseinrichtung (17, 17') aus der mindestens einen Arbeitsstellung zurück in die mindestens eine Parkstellung oder weiter in eine andere Parkstellung,
- Verschwenken des Schwenkträgers (7) in die andere Drehendstellung,
- Wiederholen der obigen Verfahrensschritte.

15. Verfahren nach Anspruch 14, **dadurch gekennzeichnet, dass** bei der Hinfahrt einer zwei unterschiedliche Funktionseinrichtungen (17) aufweisenden Multifunktionseinheit nur eine der beiden Funktionseinrichtungen und bei der Rückfahrt der Multifunktionseinheit nur die andere Funktionseinrichtung aktiviert werden.

## Claims

1. Machine tool (1) for, in particular, machining workpieces (2), comprising
- a front loading space (3) and a rear working space (4) with at least one working spindle (5) for, in particular, machining workpieces (2),
- a swivel carrier (7) arranged between the loading space (3) and the working space (4), which is mounted so as to be rotatable about a horizontal main axis of rotation (8) and has at least one workpiece carrier (10a, 10b) on each of two carrier sides (9a, 9b) disposed opposite each other with respect to the main axis of rotation (8) for clamping workpieces (2), wherein the swivel carrier (7) is oriented upright in a first rotational end position and in a second rotational end position rotated through 180° relative to the first rotational end position, wherein in the first rotational end position of the swivel carrier (7), one of the two workpiece carriers (10a, 10b) is arranged in the loading space (3) for loading with workpieces (2) and the other workpiece carrier is arranged in the working space (4) for machining workpieces (2), and in the second rotational end position of the swivel carrier (7), the two workpiece carriers (10a, 10b) are interchanged with each other, wherein the swivel carrier (7) protrudes less far into the loading and working spaces (3, 4) in the two rotational end positions than during the swivelling between the two rotational end positions, and
- at least one functional device (17, 17') which interacts with the clamped workpieces (2) and is movably mounted driven by a motor between at least one parking position, which is located outside an enveloping cylinder (16) defined by rotation of the swivel carrier (7), and at least one working position, which is located inside the enveloping cylinder (16) and in the two rotational end positions of the swivel carrier (7) in front of one of the two workpiece carriers (10a, 10b) in each case,
**characterized in that**
the at least one functional device (17, 17') is guided in a manner such that it can be displaced in the axial direction of the main axis of rotation (8) between the at least one parking position and the at least one working position by means of at least one guide (18, 18') which is arranged in the loading or working space (3, 4) outside the enveloping cylinder (16).

2. Machine tool according to claim 1, **characterized in that** the at least one functional device (17, 17') is arranged in its working position in the loading space (3) or in the working space (4).

3. Machine tool according to claim 1 or 2, **characterized by** at least two functional devices (17, 17'), one of which is arranged in its working position in the loading space (3) and the other is arranged in its working position in the working space (4).

4. Machine tool according to one of the preceding claims, **characterized in that** the functional device (17, 17') has a parking position on both axial sides of the enveloping cylinder (16).

5. Machine tool according to one of the preceding claims, **characterized in that** the at least one functional device (17, 17') is a scanner for scanning the clamped workpieces (2) or a pre- or post-processing device for pre- or post-processing the clamped workpieces (2), in particular a cleaning device for cleaning the clamped workpieces (2).

6. Machine tool according to one of the preceding claims, **characterized in that** the at least one working position of the functional device (17, 17') comprises every axial position along the swivel carrier (7).

7. Machine tool according to one of the preceding claims, **characterized in that** the at least one guide (18, 18') extends parallel to the main axis of rotation (8) and along the entire swivel carrier (7).

8. Machine tool according to one of the preceding claims, **characterized in that** the at least one guide (18, 18') is arranged below or above the enveloping cylinder (16).

9. Machine tool according to one of the preceding claims, **characterized by** an upper and a lower guide, in which the at least one functional device (17, 17') is guided at the top and at the bottom so as to be displaceable between the at least one parking position and the at least one working position.

10. Machine tool according to one of the preceding claims, **characterized in that** the workpiece carriers (10a, 10b) are each mounted on the swivel carrier (7) so as to be rotatable about an A-axis (11) parallel to the main axis of rotation (8).

11. Machine tool according to claim 10, **characterized in that** the swivel carrier (7) has at least two workpiece carriers (10a, 10b) on each of its two carrier sides (9a, 9b), each of which is mounted so as to be rotatable about an A-axis (11) parallel to the main axis of rotation (8).

12. Machine tool according to claim 10 or 11, **characterized in that** the swivel carrier (7) has two side cheeks (13) mounted so as to be rotatable about the main axis of rotation (8), between which the workpiece carriers (10a, 10b) are arranged and on which the workpiece carriers (10a, 10b) are rotatably mounted about the A-axis (11), and two radially outer connecting carriers (14) which connect the two side cheeks (13) to each other to form a rotary joint.

13. Machine tool according to one of claims 1 to 9, **characterized in that** the swivel carrier (7) is formed by a swivel carrier plate (20), wherein the two carrier sides (9a, 9b) of the swivel carrier plate, which are arranged opposite each other relative to the main axis of rotation (8), each have a workpiece carrier (10a, 10b), in particular with a support edge (21a, 21b) for workpieces (2).

14. Method for main time parallel scanning and/or pre- or post-processing, in particular cleaning, of workpieces (2) on a machine tool (1) according to one of the preceding claims, comprising the following method steps:
- swivelling the swivel carrier (7) into one of the rotational end positions,
- loading the workpiece carrier (10a) on the loading space side with workpieces (2) and/or machining the workpieces (2) clamped on the workpiece carrier (10b) on the working space side by means of the at least one work spindle (5),
- moving the at least one functional device (17, 17') from the at least one parking position into the at least one working position,
- scanning and/or pre- or post-processing, in particular cleaning, of workpieces (2) clamped on the loading space side and/or working space side by means of the at least one functional device (17, 17'),
- moving the at least one functional device (17, 17') from the at least one working position back to the at least one parking position or further to another parking position,
- swivelling the swivel carrier (7) into the other rotational end position,
- repeating the above method steps.

15. Method according to claim 14, **characterised in that**, during the forward movement of a multifunctional unit comprising two different functional devices (17), only one of the two functional devices is activated and, during the return movement of the multifunctional unit, only the other functional device is activated.

## Revendications

1. Machine-outil (1) notamment affectée à l'usinage de pièces (2) par enlèvement de copeaux, comprenant
- un espace antérieur de chargement (3) et un espace postérieur de travail (4) doté d'au moins une broche de travail (5) dévolue, en particulier, à l'usinage de pièces (2) par enlèvement de copeaux,
- un support pivotant (7) interposé entre l'espace de chargement (3) et l'espace de travail (4), monté rotatif autour d'un axe principal de rotation (8) horizontal et muni à chaque fois, sur deux côtés (9a, 9b) dudit support tournés à l'opposé l'un de l'autre par rapport audit axe principal de rotation (8), d'au moins un porte-pièces (10a, 10b) dédié à l'ablocage de pièces (2), ledit support pivotant (7) étant orienté à la verticale dans une première position finale prise par rotation et dans une seconde position finale prise par rotation, déjetée de 180° vis-à-vis de la première position finale prise par rotation, sachant que, dans ladite première position finale du support pivotant (7), prise par rotation, l'un des deux porte-pièces (10a, 10b) est agencé en vue de charger des pièces (2) dans l'espace de chargement (3) et l'autre porte-pièces est agencé en vue d'usiner des pièces (2) dans l'espace de travail (4), et sachant que les deux porte-pièces (10a, 10b) sont intervertis dans ladite seconde position finale dudit support pivotant (7), prise par rotation, étant précisé que, dans les deux positions finales prises par rotation, ledit support pivotant (7) pénètre moins profondément, dans lesdits espaces de chargement et de travail (3, 4), que lors du pivotement entre lesdites deux positions finales prises par rotation, et
- au moins un dispositif fonctionnel (17, 17') qui, coopérant avec les pièces (2) abloquées, est monté avec mobilité motorisée entre au moins une position d'immobilisation, située à l'extérieur d'un cylindre enveloppant (16) défini par rotation du support pivotant (7), et au moins une position opérante qui est située à l'intérieur dudit cylindre enveloppant (16) et se trouve devant l'un respectif des deux porte-pièces (10a, 10b) dans les deux positions finales dudit support pivotant (7), prises par rotation,
**caractérisée par le fait**
**que** le dispositif fonctionnel (17, 17'), à présence minimale, est guidé avec faculté de mouvement dans la direction axiale de l'axe principal de rotation (8), entre la position d'immobilisation prévue au minimum et la position opérante prévue au minimum, à l'aide d'au moins un guide (18, 18') situé à l'extérieur du cylindre enveloppant (16) dans l'espace (3, 4) de chargement ou de travail.

2. Machine-outil selon la revendication 1, **caractérisée par le fait que** le dispositif fonctionnel (17, 17'), à présence minimale, est situé dans l'espace de chargement (3) ou dans l'espace de travail (4) lorsqu'il occupe sa position opérante.

3. Machine-outil selon la revendication 1 ou 2, **caractérisée par** au moins deux dispositifs fonctionnels (17, 17') dont l'un est situé dans l'espace de chargement (3) lorsqu'il occupe sa position opérante, l'autre étant situé dans l'espace de travail (4) lorsqu'il occupe sa position opérante.

4. Machine-outil selon l'une des revendications précédentes, **caractérisée par le fait que** le dispositif fonctionnel (17, 17') présente une position respective d'immobilisation des deux côtés du cylindre enveloppant (16), dans le sens axial.

5. Machine-outil selon l'une des revendications précédentes, **caractérisée par le fait que** le dispositif fonctionnel (17, 17'), à présence minimale, est un scanneur dévolu à la numérisation par balayage des pièces (2) abloquées, ou bien un dispositif de traitement préalable ou ultérieur affecté au prétraitement ou au post-traitement desdites pièces (2) abloquées, en particulier un dispositif de nettoyage conçu pour nettoyer lesdites pièces (2) abloquées.

6. Machine-outil selon l'une des revendications précédentes, **caractérisée par le fait que** la position opérante du dispositif fonctionnel (17, 17'), prévue au minimum, inclut chaque position axiale le long du support pivotant (7).

7. Machine-outil selon l'une des revendications précédentes, **caractérisée par le fait que** le guide (18, 18'), à présence minimale, s'étend parallèlement à l'axe principal de rotation (8) et le long de l'intégralité du support pivotant (7).

8. Machine-outil selon l'une des revendications précédentes, **caractérisée par le fait que** le guide (18, 18'), à présence minimale, est implanté au-dessous ou au-dessus du cylindre enveloppant (13).

9. Machine-outil selon l'une des revendications précédentes, **caractérisée par** des guides supérieur et inférieur dans lesquels le dispositif fonctionnel (17, 17'), à présence minimale, est guidé avec faculté de mouvements ascendant et descendant entre la position d'immobilisation, prévue au minimum, et la position opérante prévue au minimum.

10. Machine-outil selon l'une des revendications précédentes, **caractérisée par le fait que** les porte-pièces (10a, 10b) sont montés rotatifs, sur le support pivotant (7), à chaque fois autour d'un axe A (11) parallèle à l'axe principal de rotation (8).

11. Machine-outil selon la revendication 10, **caractérisée par le fait que** le support pivotant (7) est pourvu, sur chacun de ses deux côtés (9a, 9b), d'au moins deux porte-pièces (10a, 10b) montés rotatifs, à chaque fois, autour d'un axe A (11) parallèle à l'axe principal de rotation (8).

12. Machine-outil selon la revendication 10 ou 11, **caractérisée par le fait que** le support pivotant (7) est nanti de deux parements latéraux (13) montés rotatifs autour de l'axe principal de rotation (8), entre lesquels les porte-pièces (10a, 10b) sont disposés et sur lesquels lesdits porte-pièces (10a, 10b) sont montés à rotation autour de l'axe A (11), ainsi que de deux supports de liaison (14) radialement extérieurs, qui relient l'un à l'autre les deux parements latéraux (13) afin de former un ensemble tournant.

13. Machine-outil selon l'une des revendications 1 à 9, **caractérisée par le fait que** le support pivotant (7) est constitué d'une platine pivotante de support (20) sur les deux côtés porteurs (9a, 9b) de laquelle, tournés à l'opposé l'un de l'autre par rapport à l'axe principal de rotation (8), est implanté un porte-pièces (10a, 10b) respectif muni, en particulier, d'un rebord d'appui (21a, 21b) destiné à des pièces (2).

14. Procédé de numérisation par balayage et/ou de traitement préalable ou ultérieur, notamment de nettoyage de pièces (2) parallèlement au temps de production, sur une machine-outil (1) conforme à l'une des revendications précédentes, comprenant les étapes opératoires suivantes :
- pivotement imprimé au support pivotant (7) vers l'une des positions finales prises par rotation,
- chargement, par des pièces (2), du porte-pièces (10a) situé côté espace de chargement et/ou usinage, au moyen de la broche de travail (5) à présence minimale, des pièces (2) abloquées sur le porte-pièces (10b) situé côté espace de travail,
- mouvement imprimé au dispositif fonctionnel (17, 17') à présence minimale, vers la position opérante prévue au minimum, à partir de la position d'immobilisation prévue au minimum,
- numérisation par balayage et/ou traitement préalable ou ultérieur, en particulier nettoyage, au moyen dudit dispositif fonctionnel (17, 17') à présence minimale, de pièces (2) abloquées côté espace de chargement et/ou côté espace de travail,
- mouvement rétrograde imprimé audit dispositif fonctionnel (17, 17') à présence minimale, à partir de ladite position opérante prévue au minimum, vers ladite position d'immobilisation prévue au minimum, voire encore vers une autre position d'immobilisation,
- pivotement imprimé audit support pivotant (7) vers l'autre position finale prise par rotation,
- réitération des étapes opératoires qui précèdent.

15. Procédé selon la revendication 14, **caractérisé par le fait que**, lors du mouvement d'aller d'une unité multifonctionnelle comptant deux dispositifs fonctionnels (17) différents, l'un seulement desdits deux dispositifs fonctionnels est activé, seul l'autre dispositif fonctionnel étant activé lors du retour de ladite unité multifonctionnelle.
